# EUROPEAN PATENT APPLICATION

(11) **EP 2 680 458 A2**
(43) Date of publication of application: **01.01.2014**
(21) Application number: 13003156.0
(22) Date of filing: 20.06.2013
(51) Int. Cl.: H04B 5/00

(54) **Automatic Gain Control for an NFC Reader Demodulator**

(30) Priority: 25.06.2012 US 201213532087
(71) Applicant: Broadcom Corporation, Irvine, CA 92617 (US)
(72) Inventor: Lefley, Alastair, Kemble, GL7 6BE (GB)
(74) Representative: Jehle, Volker Armin

(57) **Abstract**

An apparatus and method is disclosed to provide improved NFC communications. A first NFC device antenna transmits information to a second NFC device by driving an antenna module with a current to generate a magnetic field. The magnetic field is modulated and the information is transmitted according to a first set of operating parameters. A second NFC device harvests power from the magnetic field and communicates information to the first NFC device by modulating the magnetic field according to a second set of operating parameters, which is received by the first NFC device. The first NFC device recovers a signal metric from the modulated magnetic field. The first NFC device uses the signal metric to provide feedback regarding the second set of operating parameters. Various systems are presented to utilize the signal metric feedback and provide efficient and reliable communications between the first and second NFC devices.

## Description

### BACKGROUND

### Field of Disclosure

The disclosure relates to near field communications (NFC), and more specifically to adaptively controlling one or more operational parameters of an NFC device.

### Related Art

Near field communication (NFC) devices are being integrated into mobile devices, such as smartphones for example, to facilitate the use of these mobile devices in conducting daily transactions. For example, instead of carrying numerous credit cards, the credit information provided by these credit cards can be loaded into a NFC device and stored therein to be used as needed. The NFC device is simply tapped to a credit card terminal to relay the credit information to it to complete a transaction. As another example, a ticket writing system, such as those used in bus and train terminals, can simply write ticket fare information onto the NFC device instead of providing a paper ticket to a passenger. The passenger simply taps the NFC device to a reader to ride the bus or the train without the use of the paper ticket.

NFC devices can operate such that a first NFC device commonly referred to as a "reader," communicates using power derived from a dedicated power source, such as a battery to provide an example, and a second NFC device commonly referred to as a "tag," communicates without a dedicated power source. The tag derives or harvests power from communications of the reader.

The power levels of the modulated data used for communication between the NFC devices can be prone to fluctuations. Such fluctuations can be based on various conditions, such as fluctuations in an operating environment or fluctuations in distance between the tag and the reader to provide some examples. If the fluctuations of the modulated data are significant, communication between the NFC devices can be inefficient or not possible.

### BRIEF SUMMARY OF THE INVENTION

According to an aspect, a near field communication (NFC) device comprises:
an antenna module configured to transmit data according to a first gain parameter;
a detection module configured to receive data from a second NFC device using the first gain parameter and to provide a gain adjustment signal based on the first gain parameter; and
a controller module configured to adjust the first gain parameter based on the gain adjustment signal.

Advantageously, the detection module comprises:
a peak detector circuit configured to provide a peak signal indicative of a peak power level of the received data;
a comparator configured to provide a difference signal based on a difference between the peak signal and a reference signal; and
a latch circuit configured to provide the gain adjustment signal based on the difference signal.

Advantageously, the controller is further configured to provide a gating signal indicative of an absence of a transmit or a receive state.

Advantageously, the peak signal or the gain adjustment signal is provided in response to the gating signal.

Advantageously, the controller is further configured to provide a gating signal indicative of an absence of a transmit or a receive state.

Advantageously, the gain parameter comprises:
an antenna drive current, the controller further being configured to adjust the antenna drive current in response to the gain adjustment signal.

Advantageously, the gain parameter comprises a gain/attenuation block setting, and further comprising:
a demodulator, coupled to a gain/attenuation block, the controller further configured to adjust the gain/attenuation block setting in response to the gain adjustment signal.

Advantageously, the NFC device is coupled to an electronic device, the electronic device and the NFC device together being configured to perform NFC communications.

Advantageously, the controller is further configured to provide a reference signal based on an operating threshold for NFC communications.

According to an aspect, a near field communications (NFC) device comprises:
a controller configured to generate a gating signal indicative of a state in which no data is transmitted or received;
a detector module configured to detect a communications signal and provide a signal metric in response to the gating signal; and
an adjustment module configured to adjust an operating parameter of the NFC device based on the signal metric.

Advantageously, the signal metric comprises a filter adjustment signal, and further comprising:
a modulator coupled to a first filter; and
a demodulator coupled to a second filter,
and wherein the adjustment module is further configured to adjust a filter setting of the first filter or the second filter in response to the filter adjustment signal.

Advantageously, the signal metric is provided based on a comparison to an operating parameter threshold value.

Advantageously, the NFC device comprises:
an antenna module configured to transmit a communications signal through an antenna driver output.

Advantageously, the detector module is further configured to determine an impedance of the antenna module.

Advantageously, the signal metric is selected from the group consisting of:
an antenna module impedance level;
an antenna module power level;
an antenna module voltage level; and
an antenna module current level.

According to an aspect, a method is provided for controlling communication in a near field communication (NFC) device, the method comprising:
transmitting, by a first NFC device, a first signal via a magnetic field based on a first gain parameter;
receiving, by the first NFC device, a second signal via the magnetic field from a second NFC device using the second gain parameter;
measuring, by the first NFC device, a signal metric to provide an parameter adjustment signal; and
adjusting, by the first NFC device, the first gain parameter based on the parameter adjustment signal.

Advantageously, the step of adjusting further comprises:
gating the adjusting the first gain parameter corresponding to the magnetic field in an unmodulated state.

Advantageously, the NFC device comprises an adjustable antenna driver, and wherein the step of transmitting comprises:
transmitting, by the adjustable antenna driver, the first signal, and wherein the step of adjusting comprises:
adjusting, by the first NFC device, a voltage or a current of the adjustable antenna driver.

Advantageously, the method further comprises:
generating a reference signal,
wherein the step of adjusting comprises:
adjusting the first gain parameter based on the reference signal.

Advantageously, the method comprises:
storing the first gain parameter in memory as a logged data,
wherein the step of adjusting comprises:
adjusting the first gain parameter based on the logged data.

### BRIEF DESCRIPTION OF THE DRAWINGS/FIGURES

FIG. 1 illustrates a block diagram of NFC device operation according to an exemplary embodiment of the disclosure;

FIG. 2 illustrates a block diagram of an NFC reader device that can optimize communications according to an exemplary embodiment of the disclosure;

FIG. 3 illustrates a block diagram of the detection module that can be used in the NFC device according to an exemplary embodiment of the disclosure;

FIG. 4 illustrates a block diagram of the NFC controller module and modulator that can be used in the NFC device according to an exemplary embodiment of the disclosure;

FIG. 5A illustrates a block diagram of one configuration of the antenna driver and antenna module that can be used in the NFC device according to an exemplary embodiment of the disclosure.;

FIG. 5B illustrates a block diagram of a second configuration of the antenna driver and antenna module that can be used in the NFC device according to an exemplary embodiment of the disclosure;

FIG. 6 illustrates a timing diagram of the timing of communications that can be used by the NFC device according to an exemplary embodiment of the disclosure;

The disclosure will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION OF THE DISCLOSURE

The following Detailed Description refers to accompanying drawings to illustrate exemplary embodiments consistent with the disclosure. References in the Detailed Description to "one exemplary embodiment," "an exemplary embodiment," "an example exemplary embodiment," etc., indicate that the exemplary embodiment described can include a particular feature, structure, or characteristic, but every exemplary embodiment can not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications can be made to the exemplary embodiments within the spirit and scope of the disclosure. Therefore, the Detailed Description is not meant to limit the disclosure. Rather, the scope of the disclosure is defined only in accordance with the following claims and their equivalents.

Embodiments of the disclosure can be implemented in hardware, firmware, software, or any combination thereof. Embodiments of the disclosure can also be implemented as instructions stored on a machine-readable medium, which can be read and executed by one or more processors. A machine-readable medium can include any mechanism for storing or transmitting information in a form readable by a machine (e.g., a computing device). For example, a machine-readable medium can include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions can be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the disclosure that others can, by applying knowledge of those skilled in relevant art(s), readily modify and/or adapt for various applications such exemplary embodiments, without undue experimentation, without departing from the spirit and scope of the disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Although, the description of the present disclosure is to be described in terms of NFC, those skilled in the relevant art(s) will recognize that the present disclosure can be applicable to other communications that use the near field and/or the far field without departing from the spirit and scope of the present disclosure. For example, although the present disclosure is to be described using NFC capable communication devices, those skilled in the relevant art(s) will recognize that functions of these NFC capable communication devices can be applicable to other communications devices that use the near field and/or the far field without departing from the spirit and scope of the present disclosure.

AN EXEMPLARY NEAR FIELD COMMUNICATIONS (NFC) OPERATING ENVIRONMENT

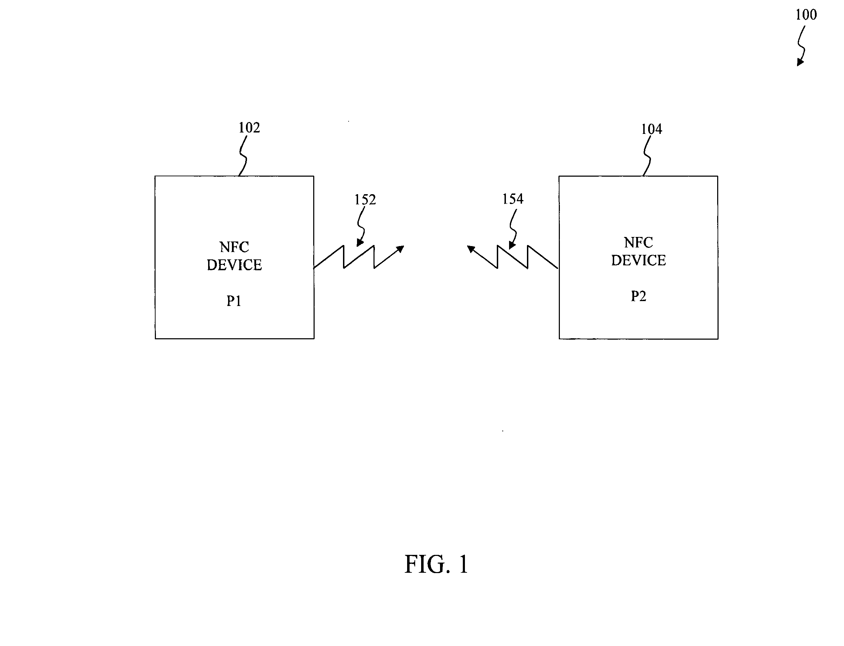

FIG. 1 illustrates a block diagram of NFC device operation according to an exemplary embodiment of the disclosure. An NFC environment 100 provides wireless communication of information, such as commands and/or data, among a first NFC device 102 and a second NFC device 104 that are sufficiently proximate to each other. The first NFC device 102 and/or the second NFC device 104 can be implemented as a standalone or a discrete device or can be incorporated within or coupled to another electrical device or host device such as a mobile telephone, a portable computing device, another computing device such as a personal, a laptop, or a desktop computer, a computer peripheral such as a printer, a portable audio and/or video player, a payment system, a ticketing writing system such as a parking ticketing system, a bus ticketing system, a train ticketing system or an entrance ticketing system to provide some examples, or in a ticket reading system, a toy, a game, a poster, packaging, advertising material, a product inventory checking system and/or any other suitable electronic device that will be apparent to those skilled in the relevant art(s) without departing from the spirit and scope of the disclosure.

The first NFC device 102 and/or the second NFC device 104 interact with each other to exchange the information, in a peer (P2P) communication mode or a reader/writer (R/W) communication mode. In the P2P communication mode, the first NFC device 102 and the second NFC device 104 can be configured to operate according to an active communication mode and/or a passive communication mode. The first NFC device 102 modulates its corresponding information onto a first carrier wave in accordance with a first operational parameter P1, referred to as a modulated information communication, and generates a first magnetic field by applying the modulated information communication to a first antenna to provide a first information communication 152. The first NFC device 102 ceases to generate the first magnetic field after transferring its corresponding information to the second NFC device 104 in the active communication mode. Alternatively, in the passive communication mode, the first NFC device 102 continues to apply the first carrier wave without its corresponding information in accordance with the first operational parameter P1, referred to as an unmodulated information communication, to continue to provide the first information communication 152 once the information has been transferred to the second NFC device 104.

The first NFC device 102 is sufficiently proximate to the second NFC device 104 such that the first information communication 152 is inductively coupled onto a second antenna of the second NFC device 104. The second NFC device 104 demodulates the first information communication 152 in accordance with a second operational parameter P2 to recover the information. The second NFC device 104 can respond to the information by modulating its corresponding information onto a second carrier wave in accordance with the second operational parameter P2 and generating a second magnetic field by applying this modulated information communication to the second antenna to provide a second information communication 154 in the active communication mode. Alternatively, the second NFC device 104 can respond to the information by modulating the second antenna with its corresponding information to modulate the first carrier wave to provide the second information communication 154 in the passive communication mode.

In the R/W communication mode, the first NFC device 102 is configured to operate in an initiator, or reader, mode of operation and the second NFC device 104 is configured to operate in a target, or tag, mode of operation. However, this example is not limiting, those skilled in the relevant art(s) will recognize that the first NFC device 102 can be configured to operate in the tag mode and the second NFC device 104 can be configured to operate as in the reader mode in accordance with the teachings herein without departing from the spirit and scope of the present disclosure. The first NFC device 102 modulates its corresponding information onto the first carrier wave in accordance with the first operational parameter P1 and generates the first magnetic field by applying the modulated information communication to the first antenna to provide the first information communication 152. The first NFC device 102 continues to apply the first carrier wave without its corresponding information in accordance with the first operational parameter P1 to continue to provide the first information communication 152 once the information has been transferred to the second NFC device 104. The first NFC device 102 is sufficiently proximate to the second NFC device 104 such that the first information communication 152 is inductively coupled onto a second antenna of the second NFC device 104.

The second NFC device 104 derives or harvests power from the first information communication 152 to recover, to process, and/or to provide a response to the information. Additionally, the second NFC device 104 can respond to the information by modulating the second antenna with its corresponding information in accordance with the second operational parameter P2 to modulate the first carrier wave to provide the second information communication 154.

The first operational parameter P1 and the second operational parameter P2 represent various configurable parameters that can be used by the first NFC device 102 and the second NFC device 104, respectively, for transmitting, processing, and receiving information. For example, the first operational parameter P1 and/or the second operational parameters P2 can represent a gain to be used by their respective NFC device, a modulation/demodulation scheme to be used by their respective NFC device, a data rate to be used by their respective NFC device, an encoding/decoding scheme to be used by their respective NFC device, and/or any combination thereof to provide some examples. Typically, the first NFC device 102 and/or the second NFC device 104 can dynamically configure the first operational parameter P1 and the second operational parameters P2 to provide efficient communication between these NFC devices. In some situations, the first NFC device 102 can dynamically configure the second operational parameter P2 of the second NFC device 104 and the second NFC device 104 can dynamically configure the first operational parameter P1 of the first NFC device 102.

AN EXEMPLARY NFC DEVICE

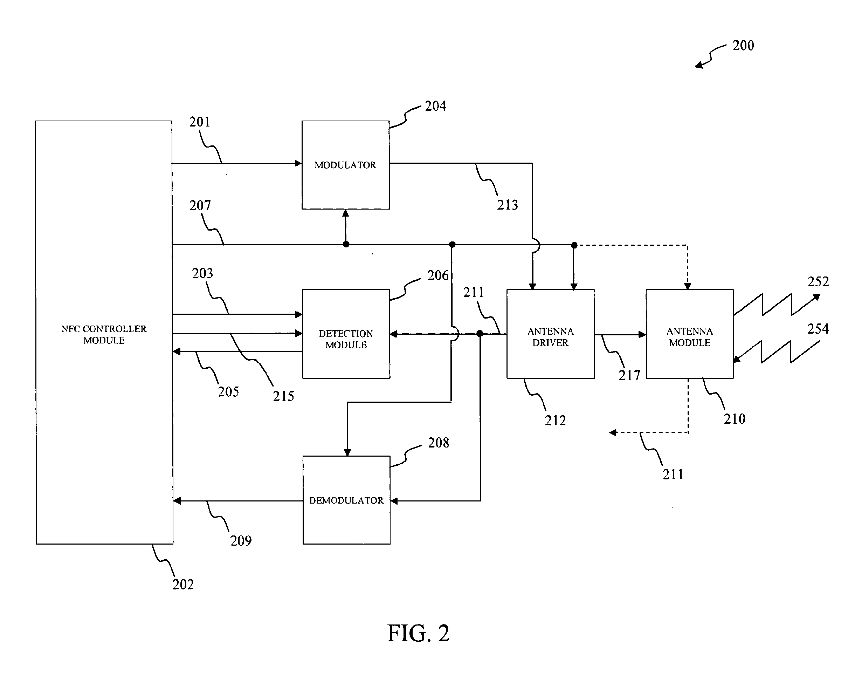

FIG. 2 illustrates a block diagram of an NFC reader device that can optimize communications according to an exemplary embodiment of the disclosure. An NFC reader 200, as illustrated in FIG. 2, can represent an exemplary embodiment of the first NFC device 102 and/or the second NFC device 104. The power source and the associated power couplings for the first NFC reader 200 are not shown in FIG. 2. It should be noted that although separate circuit blocks are illustrated in FIG. 2, the circuit blocks need not be implemented as separate hardware from NFC controller module 202. Any, some, or all of the functionality represented by the circuit blocks illustrated in FIG. 2 can be implemented as part of a single controller. An NFC controller module 202 can facilitate communications between another NFC device and/or control the operations of the various communication components of the NFC reader 200. The NFC controller module 202 sends information to be transmitted to another NFC device as digital transmit data 201. The NFC controller module 202 also receives information from another NFC device via digital receive data 209.

The NFC controller module 202 can also provide a general control signal 207 to configure and/or control one or more configurable parameters of one or more circuitry components. The one or more configurable parameters can represent a gain of the NFC reader 200, a modulation/demodulation scheme to be used by the NFC reader 200, an encoding/decoding scheme to be used by the NFC reader 200, and/or any combination thereof to provide some examples. Other examples of these configurable parameters can include adjustment of filter responses, impedance matching, antenna gain, the selection of one or more antennas, driven antenna current, driven antenna voltage, gain/attenuation block settings, or the selection of a particular communications protocol and/or type of modulation. Any, some, or all of the operating parameters can be controlled which can be integrated as part of the modulator 204, the demodulator 208, the antenna driver 212 and/or the antenna module 210. Typically, the NFC controller module 202 can configure the one or more configurable parameters via the general control signal 207 such that a signal metric 205 is less than or equal to a maximum threshold, greater than or equal to a minimum threshold, and/or between the maximum and the minimum thresholds. Furthermore, the NFC controller module 202 can, optionally, provide a gate signal 203 to be used by the detection module 206 to selectively provide the signal metric 205 at certain instances. Finally, the NFC controller module 202 can provide one or more reference signals 215 that can be used to provide a voltage and/or current threshold signal to be utilized by other circuitry of the NFC reader 200.

The detection module 206 monitors a recovered signal 211 that includes modulated information received from another NFC device. The detection module 206 measures and/or monitors the recovered signal 211 to produce a signal metric 205 such as a mean voltage and/or current level, an average voltage and/or current level, an instantaneous voltage and/or current level, a root mean square voltage and/or current level, a mean power, an average power, an instantaneous power, a root mean square power, a maximum voltage and/or current level, a minimum voltage and/or current level and/or any other suitable signal metric of the recovered signal 211 which will be apparent to those skilled in the relevant art(s) without departing from the spirit and scope of the disclosure to provide the signal metric 205. Depending on the type of signal metric 205 to be measured and/or monitored for a particular application, the recovered signal 211 can be provided at the antenna driver 212 and/or the antenna module 210, as illustrated with dashed lines in FIG. 2.

The modulator 204 modulates and converts the digital transmit data 201 to the analog domain as modulated analog transmit data 213. The demodulator 208 demodulates and converts the recovered signal 211 and converts it to the digital receive data 209 to be processed by the NFC controller module 202. The modulator 204 and/or the demodulator 208 can be characterized as having various configurable parameters that can be configured and/or controlled in response to general control signal 207.

The antenna driver 212 and the antenna module 210 work in conjunction to transmit a first information communication 252 and to receive a second information communication 254. To transmit data, the antenna driver 212 applies the modulated analog transmit data 213 to generate the antenna drive signal 217. The antenna drive signal 217 is then fed to the antenna module 210 where the antenna module 210 transmits the first information communication 252 to another NFC device. Specifically, antenna module 210 applies the antenna drive signal 217 to its inductive coupling element to generate a magnetic field that represents the modulated analog transmit data 213 to provide the first information communication 152.

To receive data, antenna driver 212 can be configured to provide the recovered signal 211 proportionate to the antenna drive signal 217. During a receive operation, analog transmit data 213, and therefore antenna drive signal 217, is held to a substantially constant and unmodulated state. The antenna module receives the second information communication 254 from another NFC device which, due to the fluctuations at the other NFC device sending the second information communication 254, modulates the load of the antenna module 210 seen by the antenna driver 212. The modulation of the recovered signal 211 provides the receive data which is demodulated by demodulator 208. Both the antenna module 210 and/or the antenna driver 212 can be characterized as having various configurable parameters that can be configured and/or controlled in response to general control signal 207.

AN EXEMPLARY DETECTION MODULE

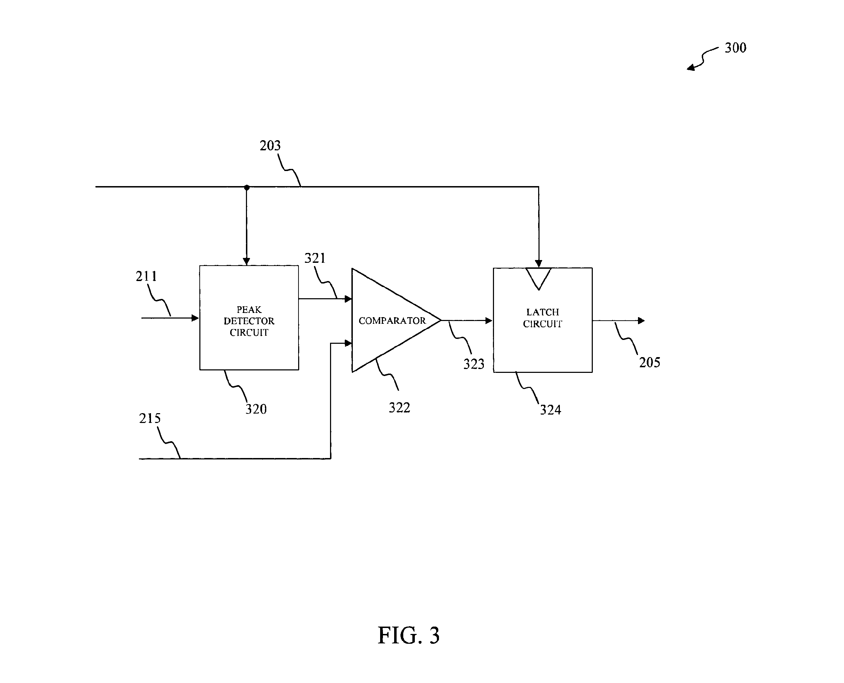

FIG. 3 illustrates a block diagram of the detection module that can be used in the NFC device according to an exemplary embodiment of the disclosure. A detection module 300 measures and/or monitors a signal metric of a recovered signal, such as the recovered signal 211 to provide an example, to be used by a controller module, such as the controller module 202 to provide an example, for configuring and/or controlling the one or more configurable parameters of an NFC device, such as the first NFC device 102, the second NFC device 104, and/or the NFC reader 200 to provide some examples. The detection module 300 includes a peak detector circuit 320, a comparator 322, and latch circuit 324. The detection module 300 can represent an exemplary embodiment of the detection module 206.

The detection module 300 receives the recovered signal 211 and generates the signal metric 205 that is proportional to a power level of the recovered signal 211. The peak detector circuit 320 generates a peak signal 321 that tracks a maximum, or peak, power level of the recovered signal 211. The peak detector circuit 320 is not limited to an analog design, and can include various mixed signal components to operate in an analog and/or digital domain. The operations and/or configurations of peak detector circuit 320 can be enabled, disabled, and/or modified through the gate signal 203. The peak detector circuit 320 can be implemented using any suitable means to detect the peak power level of the recovered signal 211 that will be apparent to those skilled in the relevant art(s) without departing from the spirit and scope of the present disclosure.

The comparator 322 compares the peak signal 321 to the reference signal 215. The comparator 322 outputs a difference signal 323 which is proportional to a difference between the peak signal 321 and the reference signal 215. The reference signal 215 is not limited to a predetermined or constant value, and can be dynamically changed by the NFC controller module 202 for a particular application and/or the operating environment. The comparator 322 can be configured such that the difference signal 323 is indicative of a sign and/or a magnitude of the difference between the peak signal 321 and the reference signal 215. In other words, by monitoring changes in the peak signal 321 as compared to the reference signal 215, the difference signal 323 can be indicative of whether the peak power of the recovered signal 211 is either too high or too low.

The latch circuit 324 provides the signal metric 205 to the NFC controller module 202 based upon the difference signal 323. The generation of the signal metric 205 using the difference signal 323 is effected through gate signal 203. In this way, the latch circuit 324 acts as a "clutch," to change the state of signal metric 205 only when such a change is desired, even though power levels associated with the difference signal 323, the peak signal 321, and/or the recovered signal 211 can be continuously fluctuating.

EXEMPLARY NFC CONTROLLER MODULE

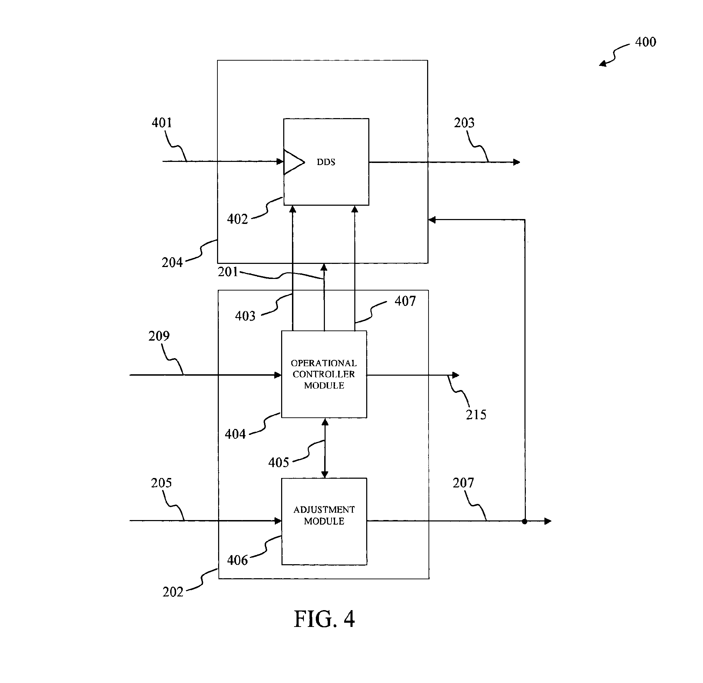

FIG. 4 illustrates a block diagram of the NFC controller module and modulator that can be used in the NFC device according to an exemplary embodiment of the disclosure. An NFC controller module and modulator 400 configures and/or controls the one or more configurable parameters of an NFC device, such as the first NFC device 102, the second NFC device 104, and/or the NFC reader 200 to provide some examples, in response to a signal metric 205 of a recovered signal, such as the recovered signal 211, to provide an example. The NFC controller module and modulator 400 includes a direct digital synthesizer (DDS) 402, an operational controller module 404, and an adjustment module 406. The NFC controller module and modulator 400 can represent an exemplary embodiment of the NFC controller module 202 and the modulator 204.

The DDS 402 receives a clocking signal 401 for the generation of clocking signals and frequency synthesis for the NFC device. The oscillator circuitry used for clocking signal 401 and the associated connections to provide clocking signal 401 are not shown in FIG. 4. The DDS 402 can also generate the gate signal 203 to control the timing of the signal metric 205. The gate signal 203 can be generated as part of the DDS timing signals indicating the periods of time in which the NFC device is not transmitting or receiving data. The DDS 402 can also generate the gate signal 203 in response to a controller DDS signal 407 generated by the operational controller module 404, to provide some examples.

The operational controller module 404 sends information 403, such as data and/or one or more commands, to the DDS 402 to be modulated by the DDS onto a carrier wave as digital transmit data 201. The operational controller module 404 receives digital receive data 209 and provides a reference signal 215. Although the reference signal 215 is illustrated as a single line in FIG. 4, it should be noted that any number of reference signals can exist as part of the NFC device for a variety of different purposes. The reference signal 215 can be analog and/or digital signal values, any of which can be changed or held to a constant value for a particular application and/or environmental conditions. The operational controller module 404 can communicate with the adjustment module 406 using a controller adjustment signal 405. By communicating with the adjustment module 406, the operational controller module 404 can further define the general control signal 207 based on the type of adjustment to be made to the other circuit components.

The operational controller module 404 can be configured to log various communicated parameters such as a bit-error rate of the digital receive data 209, the signal metric 205, and/or the general control signal 207 to provide some examples. The operational controller module 404 can store the logged data in a nonvolatile memory, for example, and access the logged data upon initialization or after a power reset. By comparing the logged values and correlating the stored parameters, the operational controller module 404 can utilize the general control signal 207 to configure the NFC device for the most efficient communications from the logged data history.

The adjustment module 406 provides the general control signal 207 in response to the signal metric 205. The adjustment module 406 can configure the one or more configurable parameters via the general control signal 207 such that the signal metric 205 is less than or equal to a maximum threshold, greater than or equal to a minimum threshold, and/or between the maximum and the minimum thresholds. To provide an example, if the signal metric 205 is too low or too high, the adjustment module 406 can configure the general control signal 207 to adjust the driven current that drives an antenna of the NFC device.

A FIRST EXEMPLARY ANTENNA DRIVER AND ANTENNA MODULE

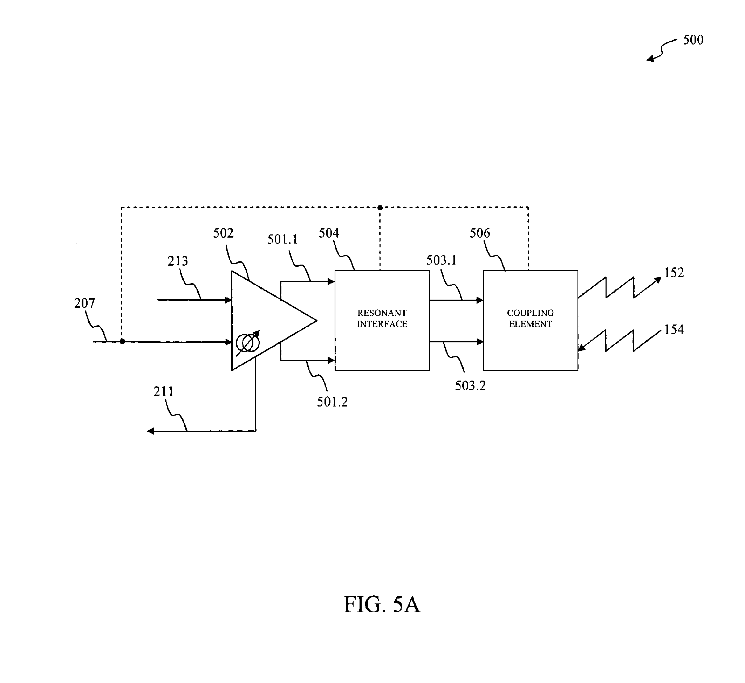

FIG. 5A illustrates a block diagram of one configuration of the antenna driver and antenna module that can be used in the NFC device according to an exemplary embodiment of the disclosure. The antenna driver and antenna module 500 generates the recovered signal 211 by monitoring, sampling, and/or measuring fluctuations in a voltage, current, and/or power at the output of antenna driver 502. Various operating parameters of antenna driver and antenna module 500 can be controlled and/or configured with general control signal 207. The antenna driver and antenna module 500 includes an antenna driver 502, an resonant interface 504, and a coupling element 506. The antenna driver and antenna module 500 can represent an exemplary embodiment of the antenna driver 212 and the antenna module 210. More specifically, the antenna driver 502 can represent an exemplary embodiment of the antenna driver 212, and the resonant interface 504 and coupling element 506 can together represent an exemplary embodiment of antenna module 210.

Although the signals illustrated in FIG. 5A are described throughout as differential signals, the disclosure is not so limiting. Any of the signals illustrated in Fig. 5A can be used in either a single-driven or differential-driven mode of operation using any suitable means to transmit and/or receive the magnetic fields for communication that will be apparent to those skilled in the relevant art(s) without departing from the spirit and scope of the present disclosure.

Although FIG. 5A illustrates a single antenna driver 502, resonant interface 504, and coupling element 506, it should be noted that the disclosure is not so limited. A plurality of the antenna driver 502, the resonant interface 504, and/or the coupling element 506 can be implemented to support modifications for various applications including increased communications range, frequency of operation, and/or communication protocols, to provide some examples.

Recovered signal 211, although illustrated as single line, can be a single-ended or differential-driven signal as long as compatibility is maintained between all signals 501, 503, and 211 operating within the antenna module 500. Recovered signal 211 can be generated using a using any suitable means that will be apparent to those skilled in the relevant art(s) without departing from the spirit and scope of the present disclosure.

The antenna driver 502 transmits the modulated analog transmit data 213 by driving the resonant interface 504 with differential signals 501.1 and 501.2. A power level of the differential signals 501.1 and 501.2, as well as the intensity of the generated magnetic field, are both proportional to the current output by the antenna driver 502. The current and/or voltage output by the antenna driver 502 can be adjusted by the general control signal 207.

The antenna driver 502 can operate as a configurable current mirror, to provide an example. In such a configuration, an indication of the output current driven through the differential signals 501.1 and 501.2 is provided through recovered signal 211. The antenna driver 502, in such a configuration, would act as a voltage driver to induce currents through the resonant interface 504 and the coupling element 506 and generate the magnetic field accordingly.

Additionally, the antenna driver 502 can sense the differential signals 501.1 and 501.2 for information that is provided by another NFC device to provide the recovered signal 211. For example, another NFC device, such as the second NFC device 104 to provide an example, inductively receives the generated magnetic field with its corresponding coupling element to harvest power and to process and/or to provide a response to the information. Once this other NFC device has harvested sufficient power, it can send the second information communication 154 through load modulation of its corresponding coupling element. Load modulation can be achieved by shunting the current induced at the second coupling element, to provide an example. The load modulation by the other NFC device manifests as a modulation of the generated magnetic field. Since the recovered signal 211 is proportional to the generated magnetic field, the recovered signal 211 also modulates along with the magnetic field modulation. By adjusting the intensity of the magnetic field through the general control signal 207, control over the power level of the recovered signal 211 can therefore be obtained, thus ensuring the proper power levels for demodulation and efficient communications.

The resonant interface 504 can include various impedance matching networks and/or transformer couplings to properly match the impedance of the antenna driver 502 to the impedance of coupling element 506. The resonant interface 504 provides appropriate connections and circuitry to condition the differential signals 501.1 and 501.2 to provide differential antenna signals 503.1 and 503.2 for transmitting first information communication 152. In some situations, the resonant interface 504 can also include a switching network, for example, in the case where more than one coupling element 506 is used. The antenna switching network can switch between one of several antennas or a group of antennas to accommodate various physical locations of another NFC device, to support diversity antenna switching, to increase or decrease antenna gain, or to support various communication frequencies and/or protocols. The resonant interface 504 can be configured to receive the general control signal 207 and implement this additional functionality in response to the one or more signal metrics 205, shown as the dashed line in FIG. 5A. The additional functionality can be controlled and adjusted separately or together with the adjustments to antenna driver 502 to provide greater communications efficiency and reliability.

The coupling element 506 includes one or more antennas designed to generate a magnetic field to transmit and receive the first information communication 152 and second information communication 154, respectively. Generally, the coupling element 506 includes one or more capacitors, inductors, resistors, a magnetic coil antenna, or any combination thereof which are configured and arranged to form a tuned element. These capacitors, inductors, resistors can be configured and arranged to form a series tuned circuit, a parallel tuned circuit, or any combination thereof. The coupling element 506 can be a single antenna or several antennas that can operate at the same or different resonant frequencies. The coupling element 506 can be configured to receive the general control signal 207 and implement additional functionality in response to one or more signal metrics 205, shown as the dashed line in FIG. 5A. To provide some examples, the switching network functions described for resonant interface 504 can be included as a part of the coupling element 506. The coupling element 506 can also have one or more tuning circuits for tuning the antenna components to a particular resonant frequency or a band of resonant frequencies for a particular application. This additional functionality can be provided separately or together with the current adjustment of antenna driver 502 and/or the functionality of resonant interface 504 to provide greater communications efficiency and reliability.

The resonant interface 504 and/or coupling element 506 can be an integrated part of the NFC device, such as the first NFC device 102 and/or the NFC reader 200, for example, implemented as part of a single integrated circuit (IC), semiconductor die, chip, and/or integrated as a part of printed circuit board (PCB) design, to provide some examples. The resonant interface 504 and/or the coupling element 506 can also be external devices, located off-chip, or separate, from the other NFC components. A signal metric of the antenna driver 502, such as a voltage, current, and/or impedance of antenna driver 502, for example, can be tuned to match an impedance represented by an off-chip resonant interface 504 and/or the coupling element 506. The antenna driver 502 can be tuned by the general control signal 207 according to the appropriate signal metric 205 provided by the recovered signal 211.

A SECOND EXEMPLARY ANTENNA DRIVER AND ANTENNA MODULE

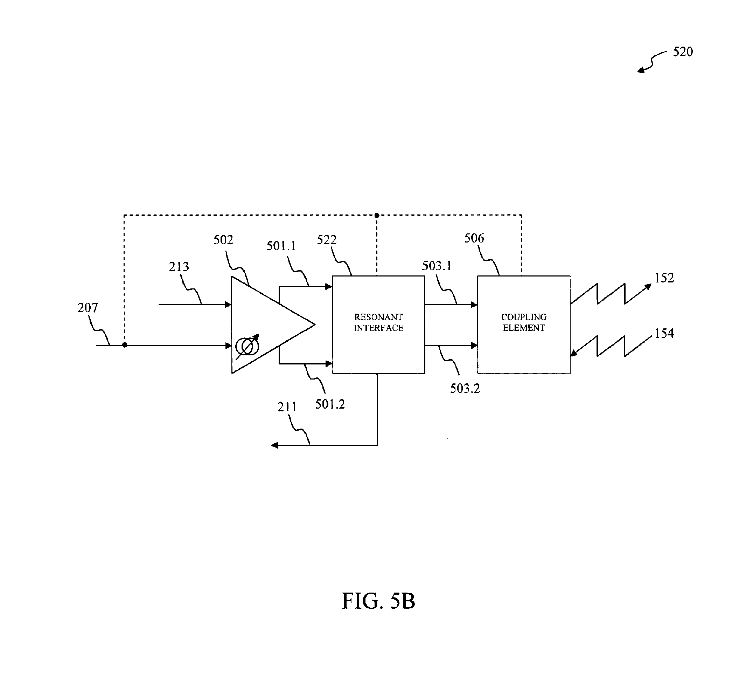

FIG. 5B illustrates a block diagram of a second configuration of the antenna driver and antenna module that can be used in the NFC device according to an exemplary embodiment of the disclosure. An antenna driver and antenna module 520 operates in a substantially similar manner as the antenna module 500; therefore, only differences between the antenna driver and antenna module 500 and the antenna driver and antenna module 520 are to be discussed in further detail. A resonant interface 522 can be designed with the appropriate circuitry to provide the recovered signal 211 at one or more points in either a differential or single-ended mode of operation. The recovered signal 211 configured in this way can provide additional and/or alternative signal metrics, such as an RMS power level of the magnetic field, the impedance of the resonant interface 522 and/or the impedance of the coupling element 506, to provide some examples.

Although FIGS. 5A-5B are illustrated as separate embodiments for providing one or more signal metrics 205 through recovered signal 211, the disclosure is not so limiting. Those skilled in the art will appreciate that the recovered signal 211 can be monitored at either the antenna driver 502 and/or the resonant interface 504 without departing from the spirit and scope of the invention.

AN EXEMPLARY NFC COMMUNICATIONS TIMING

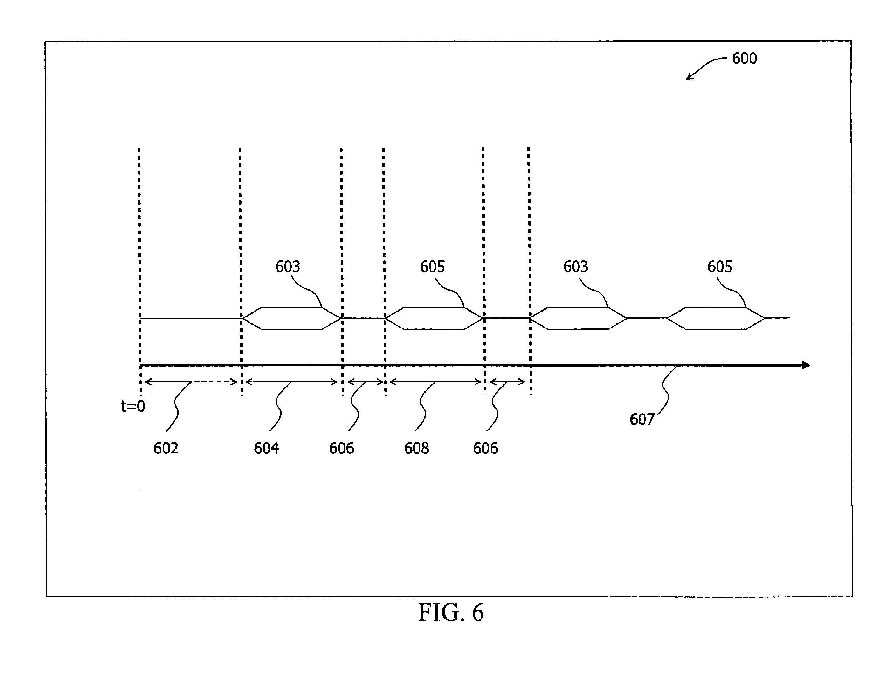

FIG. 6 illustrates a timing diagram of the timing of communications that can be used by the NFC device according to an exemplary embodiment of the disclosure. A timing diagram 600 illustrates transmission of packets between a first NFC device, such as the first NFC device 102 and/or the NFC reader 200 to provide some examples, that is configured to operate in the reader mode of operation and a second NFC device such as the second NFC device 104, that is configured to operate in the tag mode of operation over time 607.

As shown in FIG. 6, the first NFC device, optionally, receives and/or processes one or more commands and/or information from a host device or a user of the first NFC device during an initialization time frame 602. The initialization time frame 602 can also correspond to an initialization time period after first NFC device is reset, rebooted, turned on or otherwise initialized prior to the first NFC device performing communicative functions.

As additionally shown in FIG. 6, the first NFC device transmits information as a transmitted packet 603, such as the first information communication 152 to provide an example, within one or more transmit time frames 604. Afterward, the first NFC device waits for a processing time frame 606 for the second NFC device to recover and/or to process the transmitted packet 603. During this time, the first NFC device continues to apply its corresponding carrier wave without the information to allow the second NFC device to derive or harvest power for recovering and/or processing of the transmitted packet 603. The first NFC device receives a response to the information as a received packet 605 within one or more received time frames 608.

The first NFC device can dynamically configure various configurable parameters during the processing time frame 606. In some situations, the first NFC device can provide a gating signal, such as the gate signal 203 to provide an example, to selectively configure the various configurable parameters. This gating signal may indicate that the various configurable parameters are to be adjusted when at a first logical level and the various configurable parameters are to remain in their current state when at second logical level. For example, the first NFC device can dynamically adjust its gain during the processing time frame 606 as discussed above in FIG. 3.

The processing time frame 606 represents a duration of the communications between the first and the second NFC devices whereby information is not exchanged between these devices. Typically, any change in the various configurable parameters by the first NFC device during the one or more transmit time frames 604 and/or the received time frames 608 could be misinterpreted as information. Because the first NFC device is not transmitting information to the second NFC device or receiving information from the second NFC device during the processing time frame 606, this time frame can be used by the first NFC device to adjust the various configurable parameters.

### CONCLUSION

It is to be appreciated that the Detailed Description section, and not the Abstract section, is intended to be used to interpret the claims. The Abstract section can set forth one or more, but not all exemplary embodiments, of the disclosure, and thus, are not intended to limit the disclosure and the appended claims in any way.

The disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

It will be apparent to those skilled in the relevant art(s) that various changes in form and detail can be made therein without departing from the spirit and scope of the disclosure. Thus the disclosure should not be limited by any of the above-described exemplary embodiments, but should be defined only in accordance with the following claims and their equivalents.

## Claims

1. A near field communication (NFC) device, comprising:
an antenna module configured to transmit data according to a first gain parameter;
a detection module configured to receive data from a second NFC device using the first gain parameter and to provide a gain adjustment signal based on the first gain parameter; and
a controller module configured to adjust the first gain parameter based on the gain adjustment signal.

2. The NFC device of claim 1, wherein the detection module comprises:
a peak detector circuit configured to provide a peak signal indicative of a peak power level of the received data;
a comparator configured to provide a difference signal based on a difference between the peak signal and a reference signal; and
a latch circuit configured to provide the gain adjustment signal based on the difference signal.

3. The NFC device of claim 1 or 2, wherein the controller is further configured to provide a gating signal indicative of an absence of a transmit or a receive state.

4. The NFC device of claim 3, wherein the peak signal or the gain adjustment signal is provided in response to the gating signal.

5. The NFC device of any preceding claim, wherein the controller is further configured to provide a gating signal indicative of an absence of a transmit or a receive state.

6. The NFC device of any preceding claim, wherein the gain parameter comprises:
an antenna drive current, the controller further being configured to adjust the antenna drive current in response to the gain adjustment signal.

7. The NFC device of any preceding claim, wherein the gain parameter comprises a gain/attenuation block setting, and further comprising:
a demodulator, coupled to a gain/attenuation block, the controller further configured to adjust the gain/attenuation block setting in response to the gain adjustment signal.

8. The NFC device of any preceding claim, wherein the NFC device is coupled to an electronic device, the electronic device and the NFC device together being configured to perform NFC communications.

9. The NFC device of any preceding claim, wherein the controller is further configured to provide a reference signal based on an operating threshold for NFC communications.

10. A near field communications (NFC) device, comprising:
a controller configured to generate a gating signal indicative of a state in which no data is transmitted or received;
a detector module configured to detect a communications signal and provide a signal metric in response to the gating signal; and
an adjustment module configured to adjust an operating parameter of the NFC device based on the signal metric.

11. A method for controlling communication in a near field communication (NFC) device, the method comprising:
transmitting, by a first NFC device, a first signal via a magnetic field based on a first gain parameter;
receiving, by the first NFC device, a second signal via the magnetic field from a second NFC device using the second gain parameter;
measuring, by the first NFC device, a signal metric to provide an parameter adjustment signal; and
adjusting, by the first NFC device, the first gain parameter based on the parameter adjustment signal.

12. The method of claim 11, wherein the step of adjusting further comprises:
gating the adjusting the first gain parameter corresponding to the magnetic field in an unmodulated state.

13. The method of claim 11 or 12, the NFC device comprising an adjustable antenna driver, and wherein the step of transmitting comprises:
transmitting, by the adjustable antenna driver, the first signal, and wherein the step of adjusting comprises:
adjusting, by the first NFC device, a voltage or a current of the adjustable antenna driver.

14. The method of any of claims 11 to 13, further comprising:
generating a reference signal,
wherein the step of adjusting comprises:
adjusting the first gain parameter based on the reference signal.

15. The method of any of claims 11 to 14, comprising:
storing the first gain parameter in memory as a logged data,
wherein the step of adjusting comprises:
adjusting the first gain parameter based on the logged data.
